# EUROPEAN PATENT APPLICATION

(11) **EP 1 182 178 A1**
(43) Date of publication of application: **27.02.2002**
(21) Application number: 01306061.1
(22) Date of filing: 13.07.2001
(51) Int. Cl.: C03C 25/12

(54) **Manufacture of optical fiber and optical fiber tape**

(30) Priority: 13.07.2000 JP 2000212798
(71) Applicant: SHIN-ETSU CHEMICAL CO., LTD., Chiyoda-ku Tokyo (JP)
(72) Inventor: Kawada, Nobuo, c/o Advanced Functional Materials, 2-13-1, Isobe, Annaka-shi, Gunma-ken (JP); Ohba, Toshio, c/o Advanced Functional Materials, 2-13-1, Isobe, Annaka-shi, Gunma-ken (JP)
(74) Representative: Stoner, Gerard Patrick

(57) **Abstract**

An optical fiber having one or more resin coatings is manufactured by applying at least one electron beam-curable resin composition to a bare optical fiber, and exposing the resin composition to electron beams to cure the resin composition. The EB-curable resin composition contains (A) 10-90% by weight of a urethane (meth)acrylate oligomer and (B) 90-10% by weight of a reactive diluent. The exposure to electron beams is done under conditions including (a) an acceleration voltage of 50-150 kV, (b) a distance of 0.5 mm to less than 10 mm between an electron beam window and the optical fiber surface, (c) an atmosphere of nitrogen or helium under atmospheric pressure, having (d) an oxygen concentration of up to 1,000 ppm, and (e) at least two directions of irradiation to the optical fiber.

## Description

This invention relates to methods for manufacturing optical fibers having one or more resin coatings and optical fiber tapes.

### BACKGROUND

Optical communications fibers include a variety of types such as quartz glass, multi-component glass and plastic fibers. In reality, quartz glass fibers are vastly used in a wide variety of applications because of their light weight, low loss, high durability and high transmission capacity. Quartz glass fibers are very thin and sensitive to external factors so that they are prone to breakage if faintly flawed and the transmission loss is increased under external stresses as by bending. Thus the quartz glass fibers are generally provided with a two-layer resin coating including a primary soft coat layer and a surrounding or secondary hard coat layer. In a typical process, a quartz glass fiber immediately after being spun from a melt is coated with a liquid resin by a die coating technique or the like, and the coating is cured as by heat or radiation to form a primary coating. A secondary coating is applied and cured after the application and curing of the primary coating or at the same time as the primary coating. This double coated state is generally designated a coated optical fiber or simply optical fiber. A tape element is fabricated by bundling several, typically four or eight, optical fibers and coating the bundle with a liquid resin (or taping material), followed by curing as by heat or radiation.

Typical of the coating materials are urethane acrylate base ultraviolet-curable resin compositions. As disclosed in JP-B 1-19694 and Japanese Patent Nos. 2,522,663 and 2,547,021, liquid UV-curable resin compositions comprising a urethane acrylate oligomer, a reactive diluent, and a photopolymerization initiator are known.

There is a general desire to increase the drawing speed of optical fibers for productivity improvement purposes, which increases the energy per unit time required to cure resin coatings. The customary UV curing system can find no solution other than the use of an increased number of UV lamps because the output of a single UV lamp has reached near the limit. The previous approach to accommodate high speed manufacture within a limited space has encountered a limit.

Japanese Patent No. 2,541,997 discloses electron beams (EB) as exemplary active energy radiation. In general, electron beams are produced by conducting electricity across a filament of tungsten or the like in a vacuum vessel to heat the filament and emit thermal electrons, and accelerating the electrons under the impetus of a high voltage. The cure of resins by exposure to electron beams has been applied in the fields of gravure printing and release paper manufacture. Usually, electron beams are transmitted by a window in the form of a thin titanium foil disposed in the vacuum vessel to the atmospheric pressure before they are irradiated to the object.

However, the electron beam curing technology gives rise to the problem that if electron beams are irradiated to the coating material on optical fibers, germanium present in the fiber cores as a dopant can be affected, resulting in an undesirably increased transmission loss. Additionally, electron beams penetrating through a material tend to scatter and diffuse in the material, particularly when the acceleration voltage is low. This property is advantageous when electron beams are irradiated over a large area as in the case of printing, but gives rise to the problem of remarkably reduced efficiency when electron beams are irradiated to very thin objects like optical fibers.

WO 98/41484 proposes a manufacturing method based on exposure to low-voltage electron beams although this method suffers from a low cure rate.

The aim herein is to provide new methods for manufacturing optical fibers and optical fiber tapes in an efficient manner, which can reduce or eliminate the above-mentioned drawbacks and in particular are consistent with a high drawing speed.

It has been found that resin coatings can be effectively cured and formed by exposing a specific resin composition to electron beams under specific conditions.

In a first aspect, the invention provides a method for manufacturing an optical fiber comprising the steps of applying at least one electron beam-curable resin composition to a bare optical fiber, and exposing the resin composition to electron beams to cure the resin composition, thereby producing an optical fiber having one or more resin coatings. The electron beam-curable resin composition contains (A) 10 to 90% by weight of a urethane (meth)acrylate oligomer and (B) 90 to 10% by weight of a reactive diluent. The exposure to electron beams is done under conditions including (a) an electron beam acceleration voltage of 50 to 150 kV, (b) a distance of 0.5 mm to less than 10 mm between an electron beam window of an electron beam irradiating unit and the surface of the optical fiber, (c) an atmosphere of nitrogen or helium under atmospheric pressure, (d) an oxygen concentration of up to 1,000 ppm in the atmosphere, and (e) at least two directions of irradiation to the optical fiber.

In a second aspect, the invention provides a method for manufacturing a multilayer coated optical fiber comprising the steps of applying at least one electron beam-curable resin composition to an optical fiber having one or more resin coatings, and exposing the resin composition to electron beams to cure the resin composition, thereby producing a multilayer coated optical fiber. The electron beam-curable resin composition contains (A) 10 to 90% by weight of a urethane (meth)acrylate oligomer and (B) 90 to 10% by weight of a reactive diluent. The exposure to electron beams is done under conditions including (a) an electron beam acceleration voltage of 50 to 150 kV, (b) a distance of 0.5 mm to less than 10 mm between an electron beam window of an electron beam irradiating unit and the surface of the optical fiber, (c) an atmosphere of nitrogen or helium under atmospheric pressure, (d) an oxygen concentration of up to 1,000 ppm in the atmosphere, and (e) at least two directions of irradiation to the optical fiber.

In a third aspect, the invention provides a method for manufacturing an optical fiber tape comprising the steps of applying at least one electron beam-curable resin composition to a bundle of optical fibers, and exposing the resin composition to electron beams to cure the resin composition, thereby producing a resin-bound optical fiber tape. The electron beam-curable resin composition contains (A) 10 to 90% by weight of a urethane (meth)acrylate oligomer and (B) 90 to 10% by weight of a reactive diluent. The exposure to electron beams is done under conditions including (a) an electron beam acceleration voltage of 100 to 190 kV, (b) a distance of 0.5 mm to less than 10 mm between an electron beam window of an electron beam irradiating unit and the surface of the optical fiber bundle, (c) an atmosphere of nitrogen or helium under atmospheric pressure, (d) an oxygen concentration of up to 1,000 ppm in the atmosphere, and (e) at least two directions of irradiation to the optical fiber bundle.

### DETAILED EXPLANATIONS

The method for manufacturing an optical fiber according to the first aspect of the invention involves the steps of applying at least one electron beam-curable resin composition to a bare optical fiber, and exposing the resin composition to electron beams to cure the resin composition, thereby producing an optical fiber having one or more resin coatings. For example, this method is to form a primary coating from an electron beam-curable resin. The method according to the second aspect of the invention involves the steps of applying at least one electron beam-curable resin composition to an optical fiber having one or more resin coatings, and exposing the resin composition to electron beams to cure the resin composition, thereby producing a multilayer coated optical fiber. For example, this method is to form a secondary coating, an outermost protective layer or an ink layer from an electron beam-curable resin. The method for manufacturing an optical fiber tape according to the third aspect of the invention involves the steps of applying at least one electron beam-curable resin composition to a bundle of optical fibers, and exposing the resin composition to electron beams to cure the resin composition, thereby producing a resin-bound optical fiber tape.

The electron beam-curable resin composition used herein contains (A) 10 to 90% by weight of a urethane (meth)acrylate oligomer and (B) 90 to 10% by weight of a reactive diluent.

The urethane (meth)acrylate oligomer (A) is preferably one having at least two (meth)acryloyl groups in a molecule. The urethane (meth)acrylate oligomer is prepared, for example, by reacting a diisocyanate with a compound having a (meth)acryloyl group. Alternatively, it is prepared by reacting a diol having an oxyalkylene group of 2 to 10 carbon atoms and a diisocyanate with a compound having a (meth)acryloyl group.

Examples of suitable diols having an oxyalkylene group of 2 to 10 carbon atoms include polyethylene glycol, polypropylene glycol, polytetramethylene glycol, 2-methyltetrahydrofuran glycol, 3-methyltetrahydrofuran glycol, polyheptamethylene glycol, polyhexamethylene glycol, polydecamethylene glycol, and polyalkylene oxide adduct diol of bisphenol A. Preferred from the standpoints of water absorption and viscosity are polypropylene glycol, polytetramethylene glycol, 2-methyltetrahydrofuran glycol, and 3-methyltetrahydrofuran glycol. The polyalkylene oxides may be used in the form of homopolymers as well as random and block copolymers.

The diol having an oxyalkylene group preferably has a number average molecular weight (Mn) of about 800 to 10,000. With a Mn of less than 800, a cured coating may become poor in elongation, whereas a Mn in excess of 10,000 may impede cure by exposure to electron beams.

Examples of the diisocyanate include 2,4-toluene diisocyanate, 2,6-toluene diisocyanate, 1,3-xylene diisocyanate, 1,4-xylene diisocyanate, 1,5-naphthalene diisocyanate, m-phenylene diisocyanate, p-phenylene diisocyanate, hexamethylene diisocyanate, isophorone diisocyanate, 2,2,4-trimethylhexamethylene diisocyanate, and 2,4,4-trimethylhexamethylene diisocyanate. Of these, 2,4-toluene diisocyanate and isophorone diisocyanate are preferred. These diisocyanates may be used alone or in admixture of two or more.

The compounds having (meth)acryloyl groups are typically (meth)acrylic compounds having hydroxyl, acid halide or epoxy groups. Examples of suitable (meth)acrylic compounds having a hydroxyl group include 2-hydroxyethyl (meth)acrylate, 2-hydroxypropyl (meth)acrylate, pentaerythrithol tri(meth)acrylate, glycerin di(meth)-acrylate, 3-chlorohydroxypropyl (meth)acrylate, 2-hydroxy-3-phenoxypropyl (meth)acrylate, 2-(meth)acryloyloxyethyl-2-hydroxyethylphthalic acid, 2-acryloyloxyglycerin mono(meth)acrylate, 2-hydroxybutyl (meth)acrylate, polypropylene glycol mono(meth)acrylate, and polyethylene glycol mono(meth)acrylate, as well as addition products of glycidyl group-containing compounds such as alkyl glycidyl ethers and glycidyl (meth)acrylate with (meth)acrylic acid. Examples of suitable (meth)acrylic compounds having acid halide groups include (meth)acrylic acid chloride and (meth)acrylic acid bromide. Examples of suitable (meth)acrylic compounds having epoxy groups include glycidyl esters of (meth)acrylic acid.

The urethane (meth)acrylate oligomers are produced, for example, by reacting the diol with the diisocyanate at a molar ratio OH/NCO of from 1/2 to 2/1 in a conventional manner, followed by reaction with the (meth)acryloyl group-containing compound.

Next, the reactive diluent (B) is any compound having a functional group capable of radical polymerization upon exposure to electron beams, desirably a compound having in a molecule at least one (meth)acryloyl group having a high radical polymerization capability. Illustrative examples of the compounds having one (meth)acryloyl group per molecule include methoxyethylene glycol (meth)acrylate, methoxypolyethylene glycol (meth)acrylate, nonylphenoxyethyl (meth)acrylate, nonylphenoxypolyethylene glycol (meth)acrylate, nonylphenoxypolypropylene glycol (meth)acrylate, 3-chloro-2-hydroxypropyl (meth)acrylate, phenoxyethyl (meth)acrylate, phenoxypolypropylene glycol (meth)acrylate, butoxypolyethylene glycol (meth)acrylate, alkyl (meth)acrylates, cyclohexyl (meth)acrylate, tetrahydrofurfuryl (meth)acrylate, isobornyl (meth)acrylate, benzyl (meth)acrylate, cumylphenol (meth)acrylate, cumylphenoxypolyethylene glycol (meth)acrylate, cumylphenoxypolypropylene glycol (meth)acrylate, 2-hydroxypropyl (meth)acrylate, 2-ethylhexyl (meth)acrylate, dicyclopentadiene (meth)acrylate, 2-hydroxy-3-phenoxypropyl (meth)acrylate, 2-(meth)acryloyloxyethyl-2-hydroxyethyl phthalic acid, 3-acryloyloxyglycerin mono(meth)acrylate, 2-hydroxybutyl (meth)acrylate, polypropylene glycol mono(meth)acrylate, polyethylene glycol mono(meth)acrylate, poly-ε-caprolactone mono(meth)acrylate, dialkylaminoethyl (meth)acrylates, glycidyl (meth)acrylate, mono[2-(meth)acryloyloxyethyl] acid phosphate, trichloroethyl (meth)acrylate, 2,2,3,3-tetrafluoropropyl (meth)acrylate, 2,2,3,4,4,4-hexafluorobutyl (meth)acrylate, perfluorooctylethyl (meth)acrylate, dicyclopentenyl (meth)acrylate, dicyclopentenyloxyethyl (meth)acrylate, tricyclodecanyl (meth)acrylate, tricyclodecanyloxyethyl (meth)acrylate, isobornyloxyethyl (meth)acrylate, and morpholine (meth)acrylate.

Examples of the compounds having two (meth)acryloyl groups per molecule include the di(meth)acrylate of 2,2-dimethyl-3-hydroxypropyl-2,2-dimethyl-3-hydroxypropionate, ethylene glycol di(meth)acrylate, tetraethylene glycol di(meth)acrylate, polyethylene glycol di(meth)acrylate, propylene glycol di(meth)acrylate, polypropylene glycol di(meth)acrylate, 1,4-butane diol di(meth)acrylate, 1,6-hexane diol di(meth)acrylate, glycol di(meth)acrylate, neopentyl glycerin di(meth)acrylate, the di(meth)acrylate of bisphenol A-ethylene oxide adduct, the di(meth)acrylate of bisphenol A-propylene oxide adduct, 2,2'-di(hydroxyethoxyphenyl)propane di(meth)acrylate, tricyclodecane dimethylol di(meth)acrylate, dicyclopentadiene di(meth)acrylate, pentane di(meth)acrylate, and the (meth)acrylic acid adduct of 2,2-bis(glycidyloxyphenyl)-propane.

Illustrative examples of the compounds having at least three (meth)acryloyl groups per molecule include trimethylol propane tri(meth)acrylate, trimethylol propane trioxyethyl-(meth)acrylate, pentaerythritol tetra(meth)acrylate, dipentaerythritol hexa(meth)acrylate, tris((meth)acryloxymethyl) isocyanurate, tris((meth)-acryloxyethyl) isocyanurate, and tris((meth)acryloxypropyl) isocyanurate. Besides the (meth)acryloyl group-bearing compounds, there may be used allyl compounds such as triallyl trimellitate and triallyl isocyanurate and N-vinyl compounds such as N-vinylpyrrolidone, N-vinylcaprolactam, N-vinylacetamide, and N-vinylformamide. These reactive diluents may be used alone or in admixture of two or more.

The composition should contain 10 to 90%, preferably 30 to 80% by weight of the urethane (meth)acrylate oligomer (A) and 90 to 10%, preferably 70 to 20% by weight of the reactive diluent (B). If the content of urethane (meth)acrylate oligomer (A) is less than 10% by weight, it becomes difficult to form a tough coating. If the content of urethane (meth)acrylate oligomer (A) is more than 90% by weight, the composition may be too viscous to apply. If the content of reactive diluent (B) is less than 10% by weight, the composition may be too viscous to apply. If the content of reactive diluent (B) is more than 90% by weight, it becomes difficult to form a tough coating.

From the working standpoint, the composition is desirably adjusted to a viscosity of 500 to 10,000 mPa · sec at 25°C for compatibility with manufacturing conditions of optical fibers and especially 500 to 5,000 mPa · sec at 25°C for compatibility with high speed manufacturing conditions.

The resin composition used herein may contain additives in addition to the above essential components, consistent with the function of the composition in the invention. Such additives include antioxidants, UV absorbers, photostabilisers, organic solvents, plasticisers, surfactants, silane coupling agents, colouring pigments, dyes, and organic or inorganic particles. They may be conventional.

As used in the methods for manufacturing optical fibers and optical fiber tapes according to the invention, the resin composition contains 10 to 90% by weight of urethane (meth)acrylate oligomer (A) and 90 to 10% by weight of reactive diluent (B). The inclusion of urethane (meth)acrylate oligomer ensures effective cure on account of the high electron beam-induced polymerization capability of (meth)acryloyl groups, and formation of a tough coating on account of the urethane skeleton. The inclusion of reactive diluent reduces the viscosity of the composition and hence, the applicability thereof, and increases the concentration of electron beam-sensitive groups to improve the cure.

The resin composition is cured with electron beams. For exposure of the resin composition to electron beams, there is employed an electron beam irradiating unit in which electrons are produced by a gun and accelerated under an acceleration voltage to form electron beams, which emerge from an window or outlet toward the object (which is an optical fiber or optical fiber tape). According to the invention, exposure to electron beams is done under conditions including (a) an acceleration voltage of 50 to 150 kV for a coating on an optical fiber or 100 kV to 190 kV for a coating on a bundle of optical fibers (i.e., optical fiber tape), (b) a distance of 0.5 mm to less than 10 mm between the electron beam window and the surface of the optical fiber or optical fiber bundle, (c) an atmosphere of nitrogen or helium under atmospheric pressure, having (d) an oxygen concentration of up to 1,000 ppm, and (e) at least two directions of irradiation to the optical fiber or optical fiber bundle.

For exposure of the resin composition to electron beams, the electron beam acceleration voltage is set in the range of 50 to 150 kV for a coating on the optical fiber or in the range of 100 kV to 190 kV for a coating on the optical fiber bundle or tape. The penetration depth of electrons into a material depends on the acceleration voltage and the density of the material. If electron beams reach the core of the optical fiber, the core is degraded, resulting in an increased transmission loss. If the acceleration voltage is too low, electrons do not fully penetrate into the coating which remains uncured. Inversely, if the acceleration voltage is too high, electrons reach the core of the optical fiber to increase the transmission loss. It is then necessary to irradiate electron beams under an optimum acceleration voltage so that the resin coating may be cured without increasing the transmission loss.

More particularly, the coating of the optical fiber generally consists of one of more layers and usually has a total thickness of about 50 to 70 µm. When an electron beam-curable liquid resin composition is applied to a bare optical fiber as one or more layers to a thickness of 5 to 70 µm, the coating is exposed to electron beams which have been accelerated under a suitable voltage. This voltage is at least 50kV, preferably at least 60 or 70 kV. Under an acceleration voltage below 50 kV, the deep interior of the coating tends to remain uncured. The voltage is not more than 150 kV, preferably not more than 120 or 100 kV. Electrons accelerated under a voltage of higher than 150 kV tend to increase the transmission loss of the optical fiber. Also when an electron beam-curable liquid resin composition is applied to an optical fiber, in which a coating has already been formed on a bare optical fiber by the above or other method, as one or more layers to a thickness of 5 to 65 µm, the overcoating is exposed to electron beams which have been accelerated under a voltage of 50 to 150 kV, preferably 60 to 120 kV, and more preferably 70 to 100 kV, for the same reason. On the other hand, the coating of the optical fiber tape generally consists of a single layer and includes thin portions of about 20 to 30 µm thick and thick portions of about 150 to 200 µm thick. When an electron beam-curable liquid resin composition is applied to a bundle of plural optical fibers, the coating is exposed to electron beams which have been accelerated under a voltage of 100 to 190 kV, preferably 110 to 180 kV, and more preferably 120 to 170 kV. Under an acceleration voltage below 100 kV, the deep interior of thick portions of the coating remains uncured whereas electrons accelerated under a voltage of higher than 190 kV can increase the transmission loss of the optical fibers. Preferably, electron beams are irradiated to the resin coating in a dose of 10 to 100 kGy, more preferably 20 to 80 kGy. With a radiation dose of less than 10 kGy, the composition may have a too low gel fraction. A radiation dose of more than 100 kGy can trigger crosslinking reaction at undesired sites other than the intended functional groups, resulting in an increased Young's modulus.

Upon exposure, the distance between the electron beam window of the electron beam irradiating unit and the surface of the optical fiber or optical fiber bundle is at least 0.5 mm, preferably at least 1 mm. The distance is less than 10 mm, preferably no more than 9, 5 or 4 mm. A distance of 10 mm or more leads to a substantial loss of irradiation efficiency. At a distance of less than 0.5 mm, the irradiating unit can contact the optical fiber or optical fiber tape to damage the coating. The atmosphere for exposure consists of nitrogen or helium under substantially atmospheric pressure, with helium being preferred for efficient irradiation. A gas having a greater atomic number than nitrogen is not preferable because of low irradiation efficiency. Substantially subatmospheric pressure is undesirable because it allows the resin to foam. The atmosphere should have an oxygen concentration of 1,000 ppm or lower, and preferably 500 ppm or lower. An oxygen concentration of more than 1,000 ppm can cause cure defects. Further, electron beams should be irradiated to a single optical fiber in at least two directions, preferably at least three directions, and most preferably in all directions, that is, equally over the circumference. Upon irradiation in a single direction, the coating on the optical fiber has an undesirable, substantial difference of cure degree in a circumferential direction whereby the transmission loss of the optical fiber is increased. For the same reason, electron beams should be irradiated to a single optical fiber bundle or tape in at least two directions, preferably at least four directions, and most preferably in all directions, that is, equally over the oval periphery.

As electron beams propagate through a material, they are scattered by the material and diffuse even in a direction perpendicular to the propagating direction. While residing in the accelerating chamber of the electron beam irradiating unit which is in vacuum, electron beams are not spread. After emergence from the window, electron beams are diffused by gases in the space between the window and the surface of the optical fiber or optical fiber bundle (tape) so that the intensity of electron beams at the surface of the optical fiber or optical fiber bundle (tape) has been reduced in inverse proportion to the square of the distance. Therefore, if the electron beam output from the electron beam irradiating unit is the same, the irradiation efficiency of electron beams can be increased by reducing the distance between the electron beam window and the surface of the optical fiber or optical fiber bundle. This is because the dose of radiation that the optical fiber or optical fiber bundle receives during passage through the irradiating unit is generally in inverse proportion to the distance between the electron beam window and the surface of the optical fiber or optical fiber bundle. Nitrogen or helium remains chemically inert even when excited by electron beams. Of inert gases, helium causes the least diffusion of electron beams whereas gases having a greater atomic number than nitrogen cause substantial diffusion of electron beams. Then the nitrogen or helium atmosphere ensures efficient irradiation of the coating with electron beams without damaging the coating or the electron beam irradiating unit. Since oxygen traps radicals generated in the resin composition by electron beams and thus inhibits cure, the cure rate can be increased by reducing the oxygen concentration. Although electron beams which are somewhat directional do not reach the back side of the object, uniform exposure of the object (single optical fiber or single optical fiber tape) becomes possible by irradiating electron beams to the object in two or more directions.

Any irradiation apparatus as disclosed in our EP-A-1088797 may be used, for example.

### EXAMPLE

Examples of the invention are given below by way of illustration and not by way of limitation.

### Example 1

A reactor was charged with 18.2 g of 2,4-toluene diisocyanate, 20.0 g of lauryl acrylate and 0.1 g of dibutyltin dilaurate. In a dry air atmosphere, 8.1 g of 2-hydroxyethyl acrylate was added dropwise to the contents at 20-30°C, which were reacted for one hour. To the reaction mixture was added 104.3 g of polypropylene glycol having a number average molecular weight of 3,000. The mixture was heated at 40-50°C and reacted for one hour. Then 69.5 g of polytetramethylene glycol having a number average molecular weight of 2,000 was added to the reaction solution, which was slowly heated to a temperature of 60-70°C. Reaction was effected at the temperature for 2 hours, yielding urethane acrylate oligomers.

A composition A was prepared by mixing 66 parts by weight of the oligomers, 20 parts by weight of nonylphenoxypolyethylene glycol acrylate (trade name Aronix M113, Toa Gosei Co., Ltd.), 10 parts by weight of N-vinylcaprolactam, and 4 parts by weight of lauryl acrylate. Composition A had a viscosity of 4,900 mPa · sec at 25°C.

### Example 2

A reactor was charged with 56.6 g of 2,4-toluene diisocyanate and 88.6 g of polytetramethylene glycol having a number average molecular weight of 1,000, which were reacted at 70-80°C for 3 hours in a nitrogen atmosphere. The reaction mixture was then cooled to 40°C. The reactor was purged with dry air, after which 54.9 g of 2-hydroxyethyl acrylate was added. The mixture was slowly heated to a temperature of 60-70°C, at which reaction was effected for 2 hours. Then 0.1 g of dibutyltin dilaurate was added to the reaction mixture, which was reacted for a further 4 hours, yielding urethane acrylate oligomers.

A composition B was prepared by mixing 70 parts by weight of the oligomers, 20 parts by weight of isoboronyl acrylate, and 10 parts by weight of N-vinylcaprolactam. Composition B had a viscosity of 4,800 mPa · sec at 25°C.

### Example 3

A reactor was charged with 60.7 g of 2,4-toluene diisocyanate and 75.9 g of polytetramethylene glycol having a number average molecular weight of 1,000, which were reacted at 70-80°C for 3 hours in a nitrogen atmosphere. The reaction mixture was then cooled to 40°C. The reactor was purged with dry air, after which 63.3 g of 2-hydroxyethyl acrylate was added. The mixture was slowly heated to a temperature of 60-70°C, at which reaction was effected for 2 hours. Then 0.1 g of dibutyltin dilaurate was added to the reaction mixture, which was reacted for a further 4 hours, yielding urethane acrylate oligomers.

A composition C was prepared by mixing 70 parts by weight of the oligomers, 20 parts by weight of isoboronyl acrylate, and 10 parts by weight of N-vinylcaprolactam. Composition C had a viscosity of 4,200 mPa · sec at 25°C.

As described below, the compositions were applied and cured to form coatings which were measured for tensile properties, with the results shown in Table 1.
(1) Formation of cured coating
   Using an applicator, the composition was applied onto a glass plate to form a coating of about 60 µm thick. In an electron beam irradiation unit, the coating was exposed to electron beams in a predetermined dose under preset conditions, obtaining a cured coating. The irradiation unit was operated so as to accelerate electrons under a predetermined voltage, and the preset conditions included a N₂ atmosphere having an O₂ concentration of 100 ppm, and a distance of 9 mm between the window of the irradiation unit and the coating on the glass plate.
(2) Young's modulus
   The cured coating was held at 25°C and RH 50% for 24 hours before a 2.5% tensile modulus was measured under conditions: a distance between gage marks of 25 mm and a separation rate of 1 mm/min.
(3) Tensile strength and Elongation at break
   The cured coating was held at 25°C and RH 50% for 24 hours before tensile properties were measured under conditions: a distance between gage marks of 25 mm and a separation rate of 50 mm/min.

**Table 1**

| Composition | Acceleration voltage (kV) | Absorbed dose (kGy) | Young's modulus (MPa) | Tensile strength (MPa) | Elongation at break (%) |
|---|---|---|---|---|---|
| A | 100 | 30 | 1.4 | 1.5 | 130 |
| B | 100 | 30 | 800 | 45 | 65 |
| C | 150 | 30 | 960 | 40 | 40 |

### Example 4

There was furnished a bare optical fiber of the single mode having an outer diameter of 125 µm and a transmission loss of 0.188 dB/km at a wavelength of 1.55 µm. Composition A prepared in Example 1 was applied on the bare optical fiber through a coating die so that the coated optical fiber might have an outer diameter of 200 µm. The coated optical fiber was passed through an electron beam irradiating unit where the coated optical fiber was exposed to electron beams for curing. The unit was operated so as to accelerate electrons under a voltage of 80 kV. The distance between the window of the irradiation unit and the surface of the coated optical fiber was 4 mm. The atmosphere was a nitrogen atmosphere having an oxygen concentration of 500 ppm. The electron beams were irradiated to the coated optical fiber in three directions so as to provide an absorbed dose of 20 kGy in each direction. The coated optical fiber was fed at a speed of 1,000 m/min. The irradiation unit had an electron-beam power of about 0.9 kW.

On the coated optical fiber, composition B prepared in Example 2 was applied through a coating die so that the overcoated optical fiber might have an outer diameter of 250 µm. The overcoated optical fiber was passed through an electron beam irradiating unit where the overcoated optical fiber was exposed to electron beams for curing. The unit was operated so as to accelerate electrons under a voltage of 100 kV. The distance between the window of the irradiation unit and the surface of the coated optical fiber was 4 mm. The atmosphere was a nitrogen atmosphere having an oxygen concentration of 500 ppm. The electron beams were irradiated to the overcoated optical fiber in three directions so as to provide an absorbed dose of 30 kGy in each direction. The coated optical fiber was fed at a speed of 1,000 m/min. The irradiation unit had an electron-beam power of about 1.7 kW.

The thus coated optical fiber had a transmission loss of 0.189 dB/km at a wavelength of 1.55 µm. The ratio of the transmission loss after electron beam exposure to the transmission loss before electron beam exposure was 1.005, indicating an unrecognizable increase of transmission loss by electron beam exposure. The resin coating was found to have a gel fraction of 96%, indicating the fully cured state.

### Example 5

There was furnished a bare optical fiber of the single mode having an outer diameter of 125 µm and a transmission loss of 0.188 dB/km at a wavelength of 1.55 µm. Composition A prepared in Example 1 was applied on the bare optical fiber through a coating die so that the coated optical fiber might have an outer diameter of 200 µm. On the (uncured) coated optical fiber, composition B prepared in Example 2 was applied through a coating die so that the overcoated optical fiber might have an outer diameter of 250 µm. The coated optical fiber was passed through an electron beam irradiating unit where the coated optical fiber was exposed to electron beams for curing. The unit was operated so as to accelerate electrons under a voltage of 110 kV. The distance between the window of the irradiation unit and the surface of the coated optical fiber was 4 mm. The atmosphere was a nitrogen atmosphere having an oxygen concentration of 100 ppm. The electron beams were irradiated to the coated optical fiber in three directions so as to provide an absorbed dose of 50 kGy in each direction. The coated optical fiber was fed at a speed of 1,000 m/min. The irradiation unit had an electron-beam power of about 2.9 kW.

The thus coated optical fiber had a transmission loss of 0.189 dB/km at a wavelength of 1.55 µm. The ratio of the transmission loss after electron beam exposure to the transmission loss before electron beam exposure was 1.005, indicating an unrecognizable increase of transmission loss by electron beam exposure. The resin coating was found to have a gel fraction of 95%, indicating the fully cured state.

### Example 6

There was furnished a bundle of four coated optical fibers of the single mode having an outer diameter of 250 µm and a transmission loss of 0.190 dB/km at a wavelength of 1.55 µm. Composition C prepared in Example 3 was applied on the optical fiber bundle through a coating die so that the coated optical fiber tape might have outer dimensions of 400 µm x 1150 µm. The coated optical fiber tape was passed through an electron beam irradiating unit where the coated optical fiber tape was exposed to electron beams for curing. The unit was operated so as to accelerate electrons under a voltage of 145 kV. The distance between the window of the irradiation unit and the surface of the optical fiber tape was 4 mm. The atmosphere was a helium atmosphere having an oxygen concentration of 300 ppm. The electron beams were irradiated to the coated optical fiber tape in two directions so as to provide an absorbed dose of 80 kGy in each direction. The optical fiber tape was fed at a speed of 400 m/min. The irradiation unit had an electron-beam power of about 2.7 kW.

The thus bound optical fibers had a transmission loss of 0.196 dB/km at a wavelength of 1.55 µm. The ratio of the transmission loss after electron beam exposure to the transmission loss before electron beam exposure was 1.03, indicating an unrecognizable increase of transmission loss by electron beam exposure. The resin coating was found to have a gel fraction of 94%, indicating the fully cured state.

### Comparative Example

Composition A prepared in Example 1 was applied on the single mode bare optical fiber having an outer diameter of 125 µm through a coating die so that the coated optical fiber might have an outer diameter of 200 µm. The coated optical fiber was passed through an electron beam irradiating unit where the coated optical fiber was exposed to electron beams for curing. The unit was operated so as to accelerate electrons under a voltage of 80 kV. The distance between the window of the irradiation unit and the surface of the coated optical fiber was 12 mm. The atmosphere was a nitrogen atmosphere having an oxygen concentration of 500 ppm. The electron beams were irradiated to the coated optical fiber in three directions so as to provide an absorbed dose of 20 kGy in each direction. The coated optical fiber was fed at a speed of 1,000 m/min. The irradiation unit had an electron-beam power of about 3.2 kW.

On the coated optical fiber, composition B prepared in Example 2 was applied through a coating die so that the overcoated optical fiber might have an outer diameter of 250 µm. The overcoated optical fiber was passed through an electron beam irradiating unit where the overcoated optical fiber was exposed to electron beams for curing. The unit was operated so as to accelerate electrons under a voltage of 100 kV. The distance between the window of the irradiation unit and the surface of the coated optical fiber was 12 mm. The atmosphere was a nitrogen atmosphere having an oxygen concentration of 500 ppm. The electron beams were irradiated to the overcoated optical fiber in three directions so as to provide an absorbed dose of 30 kGy in each direction. The coated optical fiber was fed at a speed of 1,000 m/min. The irradiation unit had an electron-beam power of about 6.0 kW.

We have found that by these methods, optical fibers and optical fiber tapes can be manufactured in an efficient manner without detracting from the transmission characteristics thereof.

Japanese Patent Application No. 2000-212798 is incorporated herein by reference.

Although some preferred embodiments have been described, many modifications and variations may be made thereto in light of the above teachings. It is therefore to be understood that the invention may be practiced otherwise than as specifically described in the Examples.

## Claims

1. A method for manufacturing an optical fiber comprising the steps of applying at least one electron beam-curable resin composition to a bare optical fiber, and exposing the resin composition to electron beams to cure the resin composition, thereby producing an optical fiber having one or more resin coatings,
said electron beam-curable resin composition comprising (A) 10 to 90% by weight of a urethane (meth)acrylate oligomer and (B) 90 to 10% by weight of a reactive diluent,
said exposure to electron beams being done under conditions including (a) an electron beam acceleration voltage of 50 to 150 kV, (b) a distance of 0.5 mm to less than 10 mm between an electron beam window of an electron beam irradiating unit and the surface of the optical fiber, (c) an atmosphere of nitrogen or helium under atmospheric pressure, (d) an oxygen concentration of up to 1,000 ppm in the atmosphere, and (e) at least two directions of irradiation to the optical fiber.

2. A method for manufacturing a multilayer coated optical fiber comprising the steps of applying at least one electron beam-curable resin composition to an optical fiber having one or more resin coatings, and exposing the resin composition to electron beams to cure the resin composition, thereby producing a multilayer coated optical fiber,
said electron beam-curable resin composition comprising (A) 10 to 90% by weight of a urethane (meth)acrylate oligomer and (B) 90 to 10% by weight of a reactive diluent,
said exposure to electron beams being done under conditions including (a) an electron beam acceleration voltage of 50 to 150 kV, (b) a distance of 0.5 mm to less than 10 mm between an electron beam window of an electron beam irradiating unit and the surface of the optical fiber, (c) an atmosphere of nitrogen or helium under atmospheric pressure, (d) an oxygen concentration of up to 1,000 ppm in the atmosphere, and (e) at least two directions of irradiation to the optical fiber.

3. A method for manufacturing an optical fiber tape comprising the steps of applying at least one electron beam-curable resin composition to a bundle of optical fibers, and exposing the resin composition to electron beams to cure the resin composition, thereby producing a resin-bound optical fiber tape,
said electron beam-curable resin composition comprising (A) 10 to 90% by weight of a urethane (meth)acrylate oligomer and (B) 90 to 10% by weight of a reactive diluent,
said exposure to electron beams being done under conditions including (a) an electron beam acceleration voltage of 100 to 190 kV, (b) a distance of 0.5 mm to less than 10 mm between an electron beam window of an electron beam irradiating unit and the surface of the optical fiber bundle, (c) an atmosphere of nitrogen or helium under atmospheric pressure, (d) an oxygen concentration of up to 1,000 ppm in the atmosphere, and (e) at least two directions of irradiation to the optical fiber bundle.
